# EUROPÄISCHE PATENTSCHRIFT

(11) **EP 3 341 515 B1**
(45) Veröffentlichungstag und Bekanntmachung des Hinweises auf die Patenterteilung: **27.10.2021**
(21) Anmeldenummer: 16734232.8
(22) Anmeldetag: 23.06.2016
(51) Int. Cl.: D04H 3/04, D04H 3/12, B29C 70/20, B29C 70/22

(54) **VERFAHREN ZUR HERSTELLUNG EINER FASERBANDANORDNUNG MIT EINER MEHRZAHL VON WEITGEHEND PARALLEL ZUEINANDER ANGEORDNETEN MULTIFILAMENTGARNEN**
METHOD FOR PRODUCING A FIBER BAND ASSEMBLY HAVING A PLURALITY OF MULTI-FILAMENT YARNS ARRANGED LARGELY PARALLEL TO EACH OTHER
PROCÉDÉ DE FABRICATION D'UN ENSEMBLE RUBAN DE FIBRES COMPRENANT UNE PLURALITÉ DE FILS MULTIFILAMENTS AGENCÉS DANS UNE LARGE MESURE PARALLÈLEMENT LES UNS AUX AUTRES

(30) Priorität: 26.08.2015 DE 102015216253
(43) Veröffentlichungstag der Anmeldung: 04.07.2018
(73) Patentinhaber: Bayerische Motoren Werke Aktiengesellschaft, 80809 München (DE)
(72) Erfinder: FÖSSEL, Florian, 80805 München (DE); HURTIENNE, Corvin, 41542 Dormgen (DE); MARQUART, Maximilian, 81541 München (DE); PFITZER, Hanno, 84095 Furth (DE)
(86) Internationale Anmeldenummer: PCT/EP2016/064524
(87) Internationale Veröffentlichungsnummer: WO 2017/032480

(56) Entgegenhaltungen:
- EP-A1- 0 514 563
- EP-A2- 0 081 843
- JP-A- 2004 360 106
- US-A- 4 183 993
- US-A1- 2012 309 248
- US-A1- 2012 318 182

## Beschreibung

Die vorliegende Erfindung betrifft ein Verfahren zur Herstellung einer Faserbandanordnung mit mindestens zwei weitgehend parallel zueinander angeordneten Multifilamentgarnen nach dem Oberbegriff des Anspruchs 1. Die Erfindung betrifft darüber hinaus die Verwendung der nach dem Verfahren hergestellten Faserbandanordnung nach dem Anspruch 4.

Zur Herstellung von faserverstärkten Verbundbauteilen ist es bereits bekannt geworden, Kohlenstofffasem in der Form von Multifilamentgarnen von einer Spule abzuziehen und das Garn endkonturnah auf einer Werkzeugoberfläche abzulegen und durch die Wiederholung dieses Vorgangs einen Vorformling auszubilden, der dann beispielsweise mittels eines Harzinjektionsvorgang in einer geschlossenen Werkzeugform zu einem zu fertigenden Bauteil ausgebildet wird.

Der Harzwerkstoff wird bei dem Harzinjektionsvorgang in die geschlossene Werkzeugform unter Druck eingebracht, was dazu führt, dass die Multifilamentgame oder Rovings relativ zueinander verschoben werden und die durch die Ablage der Rovings in der Werkzeugoberfläche ausgebildete Struktur des Vorformlings gestört wird und es zu Verschiebungen der Fasern oder Rovings des Vorformlings kommt. Dies wiederum führt dazu, dass der Harzwerkstoff den Vorformling nicht in der gewünschten Weise durchsetzen kann und so Bauteilbereiche entstehen, die nicht die gewünschten Festigkeitswerte aufweisen. Zusätzlich können noch Bereiche entstehen, die nicht mit dem Harzwerkstoff getränkt werden können.

Auch hat es sich gezeigt, dass durch den Harzinjektionsvorgang Filamente aus den Rovings verschoben werden und so die Oberflächengüte des fertigen Bauteils nicht den gewünschten Anforderungen entspricht. Die Erfinder haben erkannt, dass die Ursache für die geschilderten Probleme in der mangelnden Quersteifigkeit der Multifilamentgarne besteht, bei denen es sich beispielsweise um 50K

Heavy Tows handeln kann. JP2004/360106 offenbart ein Verfahren zur Herstellung eine Faserbandanordnung mit parallel zueinander angeordneten Multifilamentgarnen, umfassend das Einbringen von einzelnen quer orientierten, wärmefixierbaren Verstärkungsfäden, die in Längsrichtung beabstandet sind.

Anhand der DE 199 32 842 B4 ist ein Multifilamentgarn bekannt geworden, welches zur Verarbeitung auf schlingenbildenden Maschinen vorgesehen ist und bei dem mittels eines Nähvorgangs ein im Kern als Kohlenstofffasern vorliegender Roving mit einem gehäkelten Maschenmantel umgeben wird. Damit soll das relativ starre Filamentbündel durch den Maschenmantel geschützt werden und dem so hergestellten Kohlenstofffaserngarn eine gewisse Dehnfähigkeit verliehen werden, wie es in der genannten Druckschrift ausgeführt wird.

Anhand der US 4 183 993 A ist eine Faserbandanordnung mit mindestens zwei weitgehend parallel zueinander angeordneten Multifilamentgarnen bekannt geworden, bei dem Verstärkungsfäden weitgehend quer zur Längsrichtung mit Abstand zueinander vorgesehen sind.

Anhand der EP 0 514 563 A1 ist eine Einlage aus einem Verbund eines Textilfaservlieses, eines Kettengewirks mit Multifilamentfäden und Schussfäden zur Verstärkung von Oberbekleidungsstücken bekannt geworden.

Der vorliegenden Erfindung liegt die technische Aufgabe zu Grunde, das bekannte Verfahren zur Herstellung einer Faserbandanordnung zu vereinfachen und die Zahl der mittels eines Nähvorgangs einzubringenden Verstärkungsfäden zu verringern und die Notwendigkeit der Knotenbildung zwischen den Verstärkungsfäden zu beseitigen.

Die Erfindung weist zur Lösung dieser Aufgabe die im Anspruch 1 angegebenen Merkmale auf. Vorteilhafte Ausgestaltungen hiervon sind in den weiteren Ansprüchen beschrieben.

Die Erfindung schafft ein Verfahren zur Herstellung einer Faserbandanordnung mit mindestens zwei weitgehend parallel zueinander angeordneten Multifilamentgarnen mit folgenden Schritten:
- ebene Anordnung der Multifilamentgarne in jeweils zueinander benachbarter, weitgehend paralleler langgestreckter Lage mit Abstand zwischen den Multifilamentgarnen
- Einbringen von Verstärkungsfäden weitgehend quer zur Längsrichtung der Multifilamentgarne mit Abstand zwischen den Verstärkungsfäden in Längsrichtung der Multifilamentgarne mittels eines Nähwirkvorgangs an voneinander in Axiallängsrichtung der Multifilamentgarne beabstandeten mehreren Bereichen mit mehreren Verstärkungsfäden,
- Aufwickeln der Faserbandanordnung in Rollenform
wobei
am Randbereich der langgestreckten Multifilamentgarne ein Verstärkungsfaden und wärmefixierbarer Schussfaden in Längsrichtung der Multifilamentgarne eingebracht wird und dass ein Binderharz auf die Faserbandanordnung aufgebracht wird.

Das erfindungsgemäße Verfahren trägt also dafür Sorge, dass die Multifilamentgarne in einem vorbestimmten Abstand zueinander und parallel zueinander angeordnet werden und sodann in dieser definierten Lage mittels weitgehend quer zur Längsrichtung der Multifilamentgarne vorgesehener Verstärkungsmittel aneinander festgelegt werden, wobei die Verstärkungsmittel in einem vorbestimmten Abstand zueinander in Längsrichtung der Multifilamentgarne vorgesehen sind.

Auf diese Weise wird ein Faserband mit Multifilamentgarnen geschaffen, die jeweils zueinander einen definierten Abstand aufweisen und aneinander festgelegt sind, wobei der Abstand so bemessen werden kann, dass ein für einen Harzinjektionsvorgang verwendetes Harz im unausgehärtetem Zustand diesen so zwischen den einzelnen Multifilamentgarnen ausgebildeten Flusskanal durchsetzen kann und so die Gefahr von trockenen Stellen im Faserverbundaufbau vermieden wird.

Es ist dabei nach der Erfindung vorgesehen, dass das Verstärkungsmittel ein mit Binderharz versehenes Vlies und ein mittels eines Nähwirkvorgangs eingebrachter Verstärkungsfaden ist. In Längsrichtung der Faserbandanordnung können also quer zur Längsrichtung der Multifilamentgarne im Abstand zueinander vorgesehene, sich in Breitenrichtung der Faserbandanordnung erstreckende Binderharzabschnitte vorgesehen sein und mittels eines Nähvorgangs eingebrachte Verstärkungsfäden, die die jeweiligen Multifilamentgarne aneinander festlegen und zwar unter Ausbildung eines definierten Abstands zwischen den einzelnen Multifilamentgarnen, der zum Durchsetzen durch einen Harzwerkstoff ausgebildet ist.

Es werden also in der so geschaffenen Faserbandordnung jeweils zwischen den Multifilamentgarnen Gassen oder Fließkanäle ausgebildet, durch die der Harzwerkstoff hindurchtreten kann.

Auch ist es nach der Erfindung vorgesehen, dass am Randbereich der lang gestreckten Multifilamentgarne ein Verstärkungsfaden und ein wärmefixierbarer Schussfaden in Längsrichtung der Multifilamentgarne eingebracht wird. Auf diese Weise kann ein sauberer Kantenschluss an den jeweiligen

Längsrändern der Faserbandanordnung geschaffen werden und es wird die Gefahr eines Ausfransens der Faserbandanordnung im Werkzeug vermieden und es kann eine einheitliche, ebene und glatte Oberfläche am Faserverbundbauteil ausgebildet werden.

Es ist nach einer Weiterbildung der Erfindung auch vorgesehen, dass auf die Faserbandanordnung ein Binderharz aufgebracht wird, bevor die Faserbandanordnung in Rollenform aufgewickelt wird, so dass gleichsam eine vorimprägnierte hybride Faserbandanordnung geschaffen wird.

Zur Durchführung des Nähwirkvorgangs, wie er vorstehend beschrieben worden ist, kann beispielsweise eine Kettenwirkmaschine eingesetzt werden, also beispielsweise ein Kettenwirkautomat oder eine Raschelmaschine.

Schließlich ist es nach der Erfindung auch noch vorgesehen, dass die so ausgebildete Faserbandanordnung zur Bildung eines Vorformlings verwendet wird, der zur Herstellung eines faserverstärkten Verbundbauteils vorgesehen ist.

Die Erfindung wird im folgenden anhand der Zeichnung näher erläutert. Diese zeigt in:
Fig. 1 eine schematische Darstellung einzelner Schritte zur Herstellung einer auf einer Spule oder Rolle aufgewickelter Faserbandanordnung;
Fig. 2 eine schematische Darstellung der Einbringung von Schussfäden in die Faserbandanordnung; und
Fig. 3 eine schematische Darstellung einer Faserbandanordnung in einem Schnitt quer zur Längsrichtung.

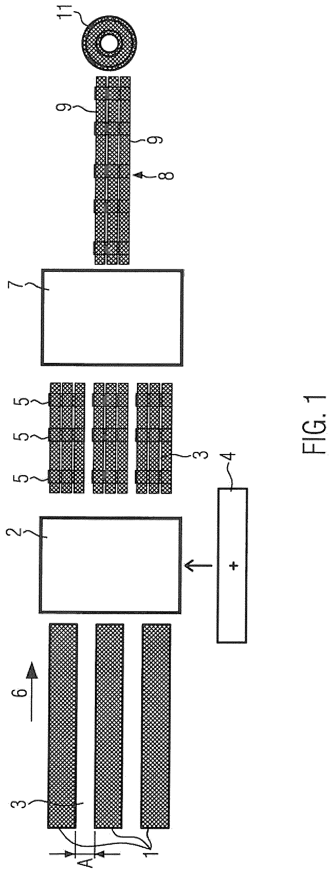

Fig. 1 der Zeichnung zeigt drei, von einer nicht näher dargestellten Spulenspeichereinrichtung abgezogene Multifilamentgarne 1, die in eine schematisch dargestellte Nähwirkmaschine 2 in der Form eines Kettenwirkautomaten eingeführt werden und zwar derart, dass zwischen den in lang gestreckter Form vorliegenden Multifilamentgarnen 1 ein vorbestimmter, mit dem Pfeil 3 bezeichneter Abstand "A" beibehalten wird.

In der Nähwirkmaschine 2 wird ein schematisch dargestellter, mit dem Bezugszeichen 4 bezeichneter Verstärkungsfaden 4 eingebracht und zwar so, dass ein Bereich 5 mit mehreren Verstärkungsfäden 4 ausgebildet wird und mehrere solche Bereiche 5 in Richtung der Axiallängsrichtung 6 der Multifilamentgarne 1 im Abstand zueinander angeordnet sind.

Wie es ohne weiteres anhand von Fig. 1 Zeichnung ersichtlich ist, werden durch die Verstärkungsfäden 4 die Multifilamentgarne 1 in ihrer Lage zueinander fixiert und zwar so, dass der Abstand 3 zwischen den Multifilamentgarnen 1 aufrechterhalten wird.

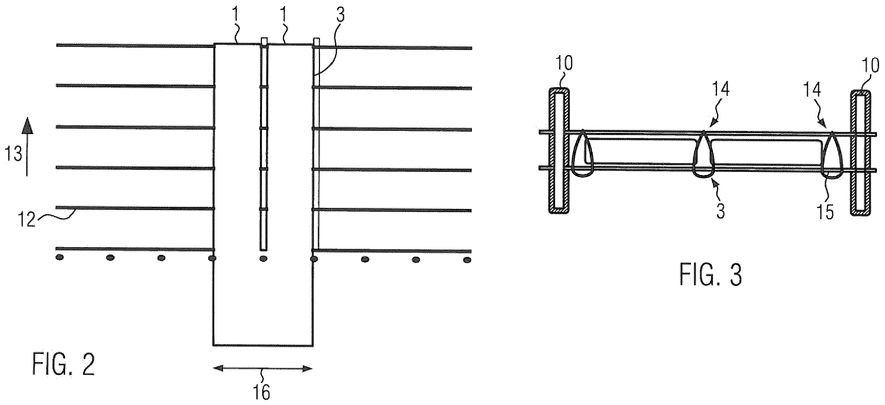

Das Bezugszeichen 7 bezeichnet eine schematisch dargestellte Maschine zur Einbringung eines Binderharzes und eines in Längsrichtung der Faserbandanordnung 8 zu beiden Längsseiten 9 eingebrachten wärmefixierbaren Schussfadens 10 (Fig.3), mit dem dafür Sorge tragen werden kann, dass ein Ausfransen der Längsseiten 9 der Faserbandanordnung 3 vermieden werden kann.

Die so hergestellte Faserbandanordnung 8 kann dann auf eine Rolle oder Spule 11 aufgewickelt werden und später dann in eine nicht näher dargestellte Speichereinrichtung eingebracht werden, von der die Faserbandanordnung 8 dann abgezogen und endkonturnah in einer Werkzeugform zur Bildung eines faserverstärkten Verbundbauteils abgelegt werden kann.

Fig. 2 der Zeichnung zeigt eine schematische Darstellung zur Erläuterung des Einbringens von Schussfäden 12 als Verstärkungsfäden 4 in die zu schaffende Faserbandanordnung 8.

Wie es ohne weiteres ersichtlich ist, werden quer zur Axiallängsrichtung 6, die gleichzeitig die Richtung 13 der Herstellung der Faserbandanordnung 8 ist, im Abstand zueinander angeordnete Schussfäden 12 in die Anordnung aus zwei parallel zueinander angeordneten Multifilamentgarnen 1 eingebracht und so die Garne 1 relativ zueinander fixiert und zwar mit einem Abstand 3 zueinander, der gleichzeitig die Gasse oder Fließkanal 14 zur Durchsetzung mit Harzwerkstoff 15 ausbildet.

Durch die Anordnung mehrerer Multifilamentgarne 1 nebeneinander kann eine Faserbandanordnung 8 in vorbestimmter Breite 16 geschaffen werden, beispielsweise mit einer Breite 16 von 12 mm.

Fig. 3 zeigt auch einen zu beiden Längsseiten der Faserbandanordnung 8 angeordneten wärmefixierbaren Schussfaden 10, der dafür sorgt, dass nach seiner Aushärtung in der Werkzeugform zur Bildung des Faserverbundbauteils der jeweilige Randbereich der Faserbandanordnung keine hervorstehenden Filamente aufweist, die dem Bauteil eine ausgefransten Randbereich verschaffen würden.

Mit dem erfindungsgemäßen Verfahren kann ein Faservorprodukt geschaffen werden, welches die Gefahr trockener Stellen - also Stellen ohne ausreichende Benetzung mit Harzwerkstoff - beim damit gefertigten Bauteil vermeidet. Der zwischen den parallel verlaufenden Multifilamentgarnen vorgesehene Zwischenraum oder Abstand sorgt für eine Gasse oder einen Fließkanal, der vom Harzwerkstoff bei der Ausbildung des Bauteils gut durchsetzt werden kann und eine durch die Einbringung von Harz in die Werkzeugform, in der ein Vorformling mit den erfindungsgemäß ausgebildeten Faserbändern ausgebildet worden ist, unbeabsichtigte Verschiebung der Multifilamentgarne wird sicher vermieden.

Hinsichtlich vorstehend im Einzelnen nicht näher erläuterter Merkmale der Erfindung wird im Übrigen ausdrücklich auf die Ansprüche und die Zeichnung verwiesen.

### Bezugszeichenliste

- 1.: Multifilamentgarn
- 2.: Nähwirkmaschine
- 3.: Abstand
- 4.: Verstärkungsfaden
- 5.: Bereich
- 6.: Axiallängsrichtung
- 7.: Maschine
- 8.: Faserbandanordnung
- 9.: Längsseiten
- 10.: wärmefixierbarer Schussfaden
- 11.: Rolle, Spule
- 12.: Schussfaden
- 13.: Produktionsrichtung
- 14.: Gasse, Fließkanal
- 15.: Harzwerkstoff
- 16.: Breite

## Patentansprüche

1. Verfahren zur Herstellung einer Faserbandanordnung (8) mit mindestens zwei weitgehend parallel zueinander angeordneten Multifilamentgarnen (1) mit folgenden Schritten:
- ebene Anordnung der Muitffiiamentgarne (1) in jeweils zueinander benachbarter, weitgehend paralleler langgestreckter Lage mit Abstand (3) zwischen den Multifilamentgarnen (1)
- Einbringen von Verstärkungsfäden (4) weitgehend quer zur Längsrichtung der Multifilamentgarne (1) mit Abstand zwischen den Verstärkungsfäden (4) in Längsrichtung der Multifilamentgarne (1) mittels eines Nähwirkvorgangs an voneinander in Axiallängsrichtung der Multifilamentgarne (1) beabstandeten mehreren Bereichen (5) mit mehreren Verstärkungsfäden (4),
- Aufwickeln der Faserbandanordnung (8) in Rollenform
**dadurch gekennzeichnet, dass**
am Randbereich der langgestreckten Multifilamentgarne (1) ein Verstärkungsfaden und wärmefixierbarer Schussfaden (10) in Längsrichtung der Multifilamentgarne (1) eingebracht wird und dass ein Binderharz auf die Faserbandanordnung (8) aufgebracht wird.

2. Verfahren nach einem der vorstehenden Ansprüche, **dadurch gekennzeichnet, dass** zur Durchführung des Nähwirkvorgangs eine Kettenwirkmaschine verwendet wird.

3. Verfahren nach einem der vorstehenden Anspruche, **dadurch gekennzeichnet, dass** der Abstand (3) zwischen den Multifilamentgarnen (1) derart ausgebildet wird, dass der Abstand (3) von unausgehärtetem Harzwerkstoff (15) durchsetzbar ist.

4. Verwendung der Faserbandanordnung hergestellt nach einem Verfahren der vorstehenden Ansprüche zur Bildung eines Vorformlings zur Herstellung eines faserverstärkten Verbundbauteils.

## Claims

1. Method for producing a fibrous tape assembly (8) having at least two multifilament yarns (1) which are disposed so as to be largely mutually parallel, said method comprising the following steps:
- disposing the multifilament yarns (1) in a planar manner, in each case in a mutually adjacent, largely parallel elongate position with a spacing (3) between the multifilament yarns (1);
- inserting reinforcement threads (4) in a manner largely transverse to the longitudinal direction of the multifilament yarns (1), with a spacing between the reinforcement threads (4) in the longitudinal direction of the multifilament yarns (1), by means of a stitch-bonding procedure at a plurality of regions (5) which are mutually spaced apart in the axial longitudinal direction of the multifilament yarns (1) and have a plurality of reinforcement threads (4);
- winding up the fibrous tape assembly (8) in the form of rolls,
**characterized in that**
at the peripheral region of the elongate multifilament yarns (1) a reinforcement thread and heat-setting-capable weft thread (10) is inserted in the longitudinal direction of the multifilament yarns (1), and **in that** a binding resin is applied to the fibrous tape assembly (8).

2. Method according to one of the preceding claims, **characterized in that** a warp-knitting machine is used for carrying out the stitch-bonding procedure.

3. Method according to one of the preceding claims, **characterized in that** the spacing (3) between the multifilament yarns (1) is configured in such a manner that the spacing (3) is able to be penetrated by non-cured resin material (15).

4. Use of the fibrous tape assembly produced by a method according to the preceding claims for forming a preform for producing a fibre-reinforced composite component.

## Revendications

1. Procédé de fabrication d'un agencement de bande fibreuse (8) comprenant au moins deux multifilaments (1) agencés essentiellement parallèlement l'un à l'autre, comprenant les étapes suivantes :
- l'agencement plan des multifilaments (1) en positions allongées essentiellement parallèles, respectivement voisines les unes des autres, avec un écart (3) entre les multifilaments (1),
- l'introduction de fils de renforcement (4) essentiellement perpendiculairement à la direction longitudinale des multifilaments (1) avec un écart entre les fils de renforcement (4) dans la direction longitudinale des multifilaments (1) au moyen d'un processus de couture-tricotage au niveau de plusieurs zones (5) espacées les unes des autres dans la direction longitudinale axiale des multifilaments (1) avec plusieurs fils de renforcement (4),
- l'enroulement de l'agencement de bande fibreuse (8) en forme de rouleau,
**caractérisé en ce que** un fil de renforcement et un film de trame (10) pouvant être fixé à chaud sont introduits au niveau de la zone de bord des multifilaments allongés (1) dans la direction longitudinale des multifilaments (1), et **en ce qu'**une résine de liaison est appliquée sur l'agencement de bande fibreuse (8).

2. Procédé selon l'une quelconque des revendications précédentes, **caractérisé en ce qu'**un métier à tricoter chaîne est utilisé pour la réalisation du processus de couture-tricotage.

3. Procédé selon l'une quelconque des revendications précédentes, **caractérisé en ce que** l'écart (3) entre les multifilaments (1) est configuré de telle sorte que l'écart (3) peut être traversé par du matériau de résine non durci (15).

4. Utilisation de l'agencement de bande fibreuse fabriqué par un procédé selon les revendications précédentes pour la formation d'une préforme pour la fabrication d'un composant composite renforcé par des fibres.
